(19) Europäisches Patentamt
European Patent Office
Office européen des brevets

(11) Publication number : **0 572 179 A2**

# (12) EUROPEAN PATENT APPLICATION

(21) Application number : **93303934.9**

(22) Date of filing : **20.05.93**

(51) Int. Cl.$^5$ : **C08L 83/06,** C09D 183/06, C08G 59/30, C08G 59/24

(30) Priority : **29.05.92 US 890888**

(43) Date of publication of application : **01.12.93 Bulletin 93/48**

(84) Designated Contracting States : **DE FR GB**

(71) Applicant : **GENERAL ELECTRIC COMPANY**
**1 River Road**
**Schenectady, NY 12345 (US)**

(72) Inventor : **Eckberg, Richard Paul**
**10 Fifth Avenue, Saratoga Springs**
**New York 12866 (US)**
Inventor : **Evans, Edwin Robert**
**9 Rodriso Court**
**Clifton Park, New York 12065 (US)**

(74) Representative : **Pratt, Richard Wilson et al**
**London Patent Operation G.E. Technical Services Co. Inc. Essex House 12/13 Essex Street**
**London WC2R 3AA (GB)**

## (54) Epoxy-silicone compositions.

(57) Epoxysilicones, epoxyfluorosilicones , and organic cycloaliphatic epoxy resins are blended with fluoro-containing organic molecules and an iodonium photocatalyst to form a UV-curable composition which exhibits improved adhesion resistance and solvent resistant properties upon curing when compared to similar compositions without the fluoro-organic molecule. The co-curable compositions can be cured at very high conveyor speed rates, such as 500 fpm. The curing also requires much less UV energy than is necessary to cure similar compositions without the fluoro-organic molecule. By selecting proper fluoro-organic molecules, the fluorine content of the composition can be greatly increased.

EP 0 572 179 A2

## CROSS REFERENCE TO RELATED APPLICATIONS

Reference is made to U.S. application Serial No. 07/676,155, filed March 27, 1991.

## BACKGROUND OF THE INVENTION

The present invention relates to novel epoxy-functional fluoro-containing silicones. More particularly, the present invention relates to novel epoxy-functional fluorosilicones which in combination with onium salt photoinitiators form UV-curable compositions having improved adhesive release properties, improved cure rate at low temperatures, and improved solvent and fuel resistance.

Ultraviolet radiation curable compositions containing epoxy-functional silicone. and onium salt photocatalysts are known in the art. Reference is made, for example, to U.S. Patent No. 4,279,717 (Eckberg et al.); U.S. Patent No. 4,576,999 (Eckberg); and U.S. Patent No. 4,640,967 (Eckberg). The epoxy-functional silicones disclosed in these patents do not contain fluorine substituents.

Fluorosilicone compositions are also known in the art. Reference is made, for example, to U.S. Patents Nos. 4,585,848 (Evans et al.) and 4,599,374 (Bluestein). These patents disclose solvent resistant rubber compositions containing a vinyl-terminated fluorosilicone copolymer gum, a platinum curing agent, and a crosslinker. The fluorosilicone compositions taught in the patents to Evans et al. and to Bluestein are room temperature vulcanizable compositions.

In U.S. Patent Application Serial No. 07/676,155, filed March 27, 1991, the inventors of the present invention describe novel epoxy-functional epoxy fluorosilicone compositions cross-linkable when irradiated with ultraviolet light in the presence of compatible iodonium photocatalysts. These materials are extremely fast curing and, dependent on their structure, provide solvent-resistant coatings when photocured. The particular structures described in that application are limited in some respects. For example, linear epoxy-terminated fluorosilicones of the structure

$$M^E D^{Rf}_x M^E,$$

where

$M^E$ = 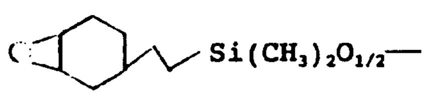

and

$D^{Rf}$ = 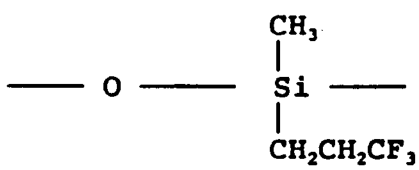

are solvent resistant where x>10. However, even in an infinite length linear polymer, the structures are limited to a maximum of 39.6 percent fluorine by weight. Epoxy-stopped linear polymers where x=20, a practical chain length in terms of coating viscosity and reactivity, possess only 35 percent fluorine by weight. All of the examples cited as reduction to practice in U.S. Application Serial No. 07/676,155 are derived from hydrolyzates including $(CF_3CH_2CH_2)CH_3\text{-}SiCl_2$, which in turn is the hydrosilation product of $H(CH_3)SiCl_2 + CH_2{=}CHCF_3$.

Curable fluorosilicones can function as release agents for silicone pressure-sensitive adhesives, which adhere to non-fluoro-containing dimethylsilicone coatings. Such coatings are most effective as release agents when the fluoro-containing silicones possess pendent fluoroalkyl groups with more fluorine by weight than is present in the $CH_2CH_2CF_3$ moiety as described in U.S. Patents Nos. 4,980,443; 4,889,753; and 4,736,048 to Dow Corning. As an example, $CF_3CF_2CF_2CF_2CH_2CH_2$-groups which are substituted for $CF_3CH_2CH_2$- groups in a linear epoxy-stopped fluorosilicone 20 siloxane units in length would raise the fluorine concentration from 35 percent to 64 percent. The high fluoro-content of such silicone coatings is thought to be responsible for improved release of methyl- and phenyl-silicone pressure sensitive adhesives due to lower compatibility compared to a $CF_3CH_2CH_2$- modified silicone. Higher fluoro-substituted silicones are also expected to provide improved solvent resistance compared to fluorosilicone coatings including the $CF_3CH_2CH_2$- group. However, high costs and limited commercial availability of fluoro-olefins having high fluorine contents such as $CH_2{=}CHCF_2CF_2CF_2CF_2CF_3$ needed to produce the high fluoro content fluorosilicones make these materials very expensive and difficult to supply in large quantity.

Although the epoxy-functional silicones disclosed in the patents recited above form excellent W-curable

compositions, it is continually desirable to provide improved W-curable epoxy-functional compositions. For example, in some applications it is desirable to improve the adhesion release properties of a silicone coating from pressure sensitive adhesives. It is also desirable to improve the cure efficiency of W-curable compositions and to improve solvent and fuel resistance of (UV-curable compositions.

In addition, it is desirable to provide epoxy-functional silicones which are more miscible with onium salt photoinitiators than currently used UV-curable epoxy-functional compositions.

The present invention provides UV-curable compositions having the improvements listed above.

## SUMMARY OF THE INVENTION

According to the present invention, the limitations of the UV-curable epoxy-fluorosilicones described above are overcome by co-curing epoxy-silicones or epoxyfluorosilicones with fluorinated organic molecules such as alcohols, polyols, acrylates, epoxies, vinyl ethers, and other fluoro-organic molecules miscible with the epoxysilicone and co-curable under UV radiation in the presence of an onium salt catalyst. More particularly, according to the present invention it has been discovered that fluorinated non-silicone monomers can be co-cured with fluoro or non-fluoro epoxysiloxanes to yield cured coatings possessing surprisingly good release from silicone PSAs and good solvent resistance. In addition, it has been discovered that certain fluoro-alcohols, when co-cured with epoxysilicone release agents in cationic UV-cure systems, dramatically improve the release performance of the cured coating (versus conventional organic PSAs) compared with non-fluoroalcohol compositions.

The present invention is based on the discovery that epoxy-functional silicones having the structural formulas described hereinafter will co-cure with fluoro-containing organic molecules to form UV-cured compositions having improved adhesive release properties and faster cure at lower UV radiation levels than non-fluoro containing epoxy-functional silicones of the prior art.

The present invention provides a blend of fluorinated organic molecules and epoxy-functional silicones selected from the group consisting of:

(A) linear epoxy-functional silicones having the general formula

(I)

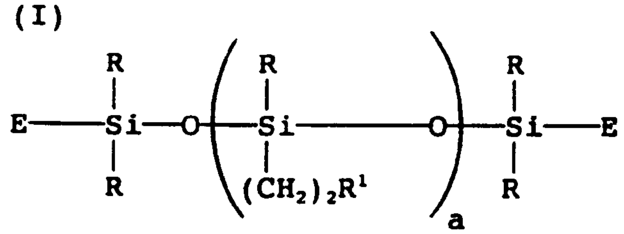

(B) resinous epoxy-functional silicones having the general formula

(II)

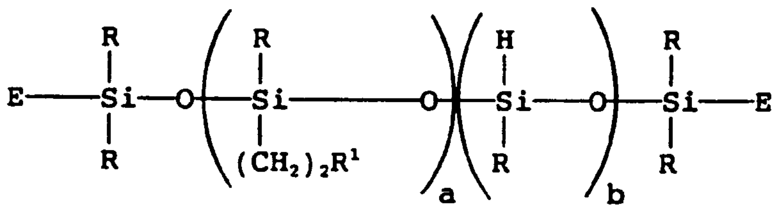

(C) resinous epoxy-functional silicones having the general formula

(III)

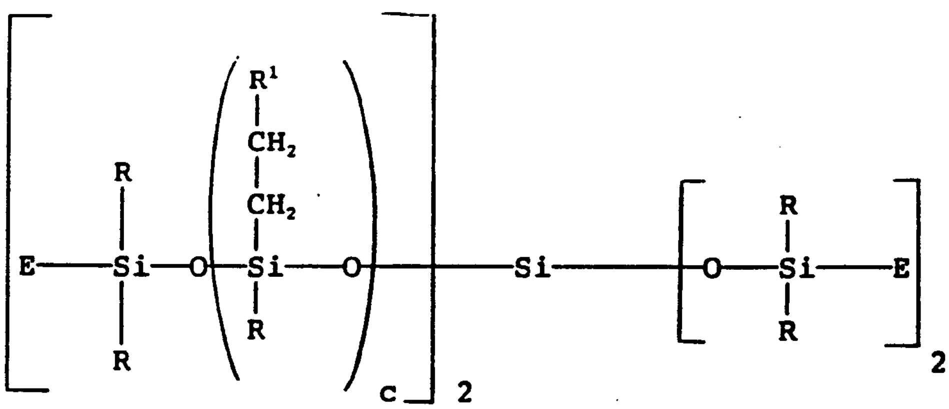

and

(D) resinous epoxy-functional silicones having the general formula

(IV)

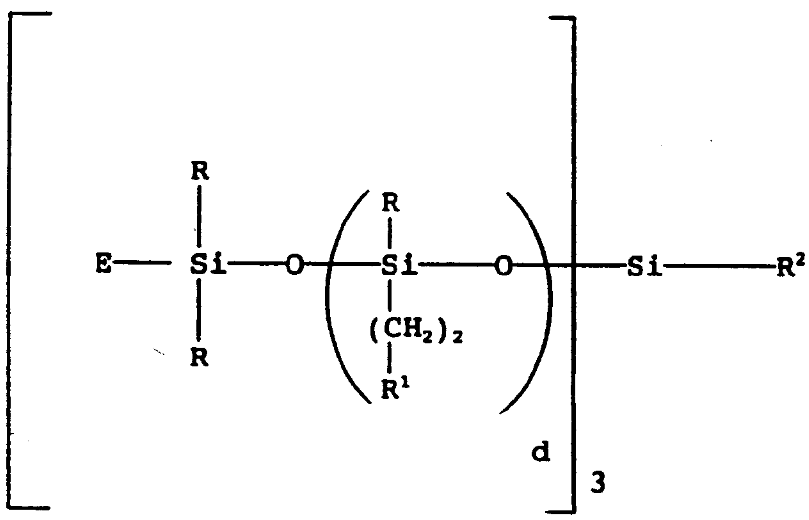

wherein E represents an epoxy-functional organic group of from about 2 to about 20 carbon atoms, R represents an alkyl radical having from 1 to about 10 carbon atoms, $R^1$ represents an alkyl radical having from about 1 to about 8 carbon atoms, $R^2$ represents an alkyl radical having from 1 to about 10 carbon atoms, "a" represents a number from 1 to about 100, "b" represents a number from 1 to about 100, "c" represents a number from 1 to about 100, and "d" represents a number from 1 to about 100. Any of formulae (I)-(IV) can represent epoxyfunctional fluorosilicones when $R^1$ represents a perfluoroalkyl radical having from about 1 to about 8 carbon atoms.

Preferred fluorinated organic molecules which may be co-cured with the epoxy-functional silicones and epoxyfluorosilicones include, but are not limited to, fluorine-containing aliphatic alcohols having from 1 to about 10 carbon atoms, and highly substituted polyols, acrylates, epoxies and vinyl ethers.

The present invention is further directed to UV radiation-curable compositions comprising an epoxy-functional silicone, or a non-silicone organic cycloaliphatic epoxy composition, a fluorinated organic molecule, and an onium salt photocatalyst or combination of onium salt photocatalysts.

The co-curable epoxy-functional silicone and fluorinated organic molecule blends described above will form W-curable compositions having improved adhesive release properties, solvent and fuel resistance, and fast cure at low UV radiation levels.

DESCRIPTION OF THE INVENTION

The present invention is directed to novel epoxy-functional silicone and fluorinated organic molecule blends and to UV-curable blends containing these epoxy-functional silicones, non-silicone organic cycloaliphatic epoxy compositions, fluorinated organic molecules, and onium salt photocatalysts.

The epoxy-functional silicones of the present invention are selected from those having formulas (I)-(IV) above.

In formulas (I)-(IV), E represents an epoxy-functional organic group of from about 2 to about 20 carbon atoms. Preferably, E represents the radical

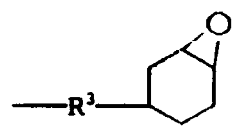

wherein $R^3$ is an alkylene radical having from 1 to about 10 carbon atoms, and most preferably an ethylene radical.

$R^1$ in formulas (I)-(IV) above is an alkyl radical having from 1 to about 8 carbon atoms. In a preferred embodiment, $R^1$ is a perfluoroalkyl radical having from 1 to about 8 carbon atoms. In one embodiment, $R^1$ represents a $-CF_3$ radical.

In formulas (I)-(IV), R and $R^2$ each represent an alkyl radical having from 1 to about 10 carbon atoms, preferably methyl. The value for "a" is a number from 1 to about 100, preferably from about 3 to about 30, and most preferably from about 10 to about 20; "b" is a number from 1 to about 100, preferably from about 3 to about 30, and most preferably from about 10 to about 20; "c" is a number from 1 to about 100, preferably from about 1 to about 20, and most preferably from about 1 to about 10; and "d" is a number from 1 to about 100, preferably from about 1 to about 20, and most preferably from about 1 to about 10.

The epoxy-functional silicone of formula (I) can be prepared as follows. A silicone telomeric disiloxanol of the general formula $HO[(R^1CH_2CH_2)(R)SiO]H$ is agitated with an organic solvent, e.g., toluene, under a blanket of nitrogen, and to the resulting mixture are added incremental amounts of dimethylchlorosilane. After addition of the organochlorosilane is complete, the reaction mixture is heated to a temperature in the range of from about 80 to about 90°C for about 2 to about 3 hours. The reaction mixture is washed with water until free of acid and then vacuum stripped to remove the solvent and water. The resultant fluid has a hydride content of from about 0.07 to about 0.15% by weight and the formula

(V)

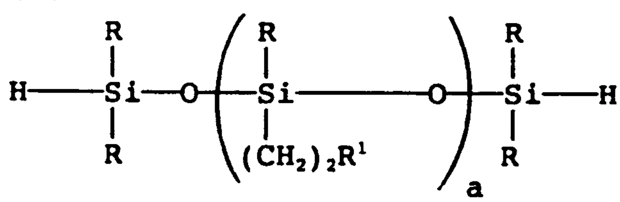

wherein R, $R^1$, and "a" are as previously defined.

The hydride-functional silicone of formula (V) is mixed with an organic solvent, e.g., toluene, and the resulting mixture is heated to a temperature of from about 50 to about 70°C. Then, an organic solvent solution containing 4-vinylcyclohexeneoxide (VCHO) which had been previously blended with an amount of a platinum catalyst sufficient to provide from about 1 to about 10 parts per million (ppm) of platinum metal based on the total weight of the composition, is added to the hydride-functional silicone of formula (V) over a period of time ranging from about 10 to about 30 minutes. The reaction mixture is maintained at a temperature of from about 60 to about 70°C, for about 1 to about 12 hours. The organic solvent and unreacted VCHO are removed from the reaction product by vigorous agitation at a temperature of about 60 to about 120°C for about 1 hour under a nitrogen sweep. The resulting product is an epoxy-functional silicone having the formula

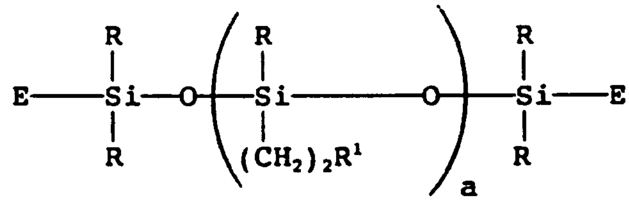

wherein E, R, $R^1$, and "a" are as previously defined.

The epoxy-functional silicone of formula (II) can be prepared as follows. A silicone telomeric disiloxanol or a fluorosilicone telomeric disiloxanol of the general formula $HO[(R^1CH_2CH_2)(R)SiO]H$ is agitated with an organic solvent, e.g., toluene, under a blanket of nitrogen, and to the resulting mixture are added incremental amounts of dimethylchlorosilane and an alkyldichlorosilane. After addition of the organochlorosilane and alkyldichlorosilane is complete, the reaction mixture is heated to a temperature in the range of from about 80 to about 90°C for about 2 to about 3 hours. The reaction mixture is washed with water until free of acid and then vacuum stripped to remove the solvent and water. The resultant fluid has a hydride content of from about 0.07 to about 0.15% by weight and the formula

(VI)

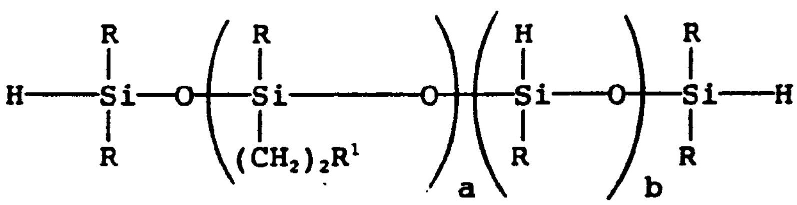

wherein R, $R^1$, "a" and "b" are as previously defined.

The hydride-functional silicone of formula (VI) is mixed with an organic solvent, e.g., toluene, and the resulting mixture is heated to a temperature of from about 50 to about 70°C. Then, an organic solvent solution containing 4-vinylcyclohexeneoxide (VCHO) which had been previously blended with an amount of a platinum catalyst sufficient to provide from about 1 to about 10 parts per million (ppm) of platinum metal based on the total weight of the composition, is added to the hydride-functional silicone of formula (VI) over a period of time ranging from about 10 to about 30 minutes. The reaction mixture is maintained at a temperature of from about 60 to about 70°C, for about 1 to about 12 hours. The organic solvent and unreacted VCHO are removed from the reaction product by vigorous agitation at a temperature of about 60 to about 120°C for about 1 hour under a nitrogen sweep. The resulting product is an epoxy-functional silicone having the formula

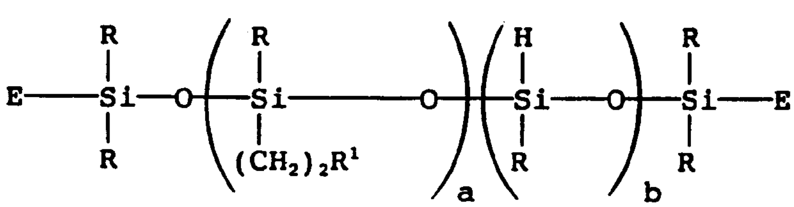

wherein E, R, $R^1$, "a" and "b" are as previously defined.

The epoxy-functional silicone resin of formula (III) can be prepared in the following manner. Methyldichlorosilane and 3,3,3-trifluoropropylmethyldichlorosilane are dissolved in dry toluene while under a nitrogen blanket. Tetraethyl-orthosilicate is added with agitation to the resulting mixture. After addition of the orthosilicate, the mixture is stirred for about 15 to about 30 minutes and then added incrementally to distilled water. External cooling is applied to keep the temperature at about 40°C. When the reaction subsides to about 25°C, the mixture is allowed to phase separate. The organic phase is then washed with water until the pH is about 6. The material is then heated while agitating under a slight nitrogen purge to a temperature of about 115°C in order

to remove solvent, water, and alcohol. The vessel temperature is then increased to about 150°C over a period of about 2 to about 3 hours and additional distillate recovered. The temperature of the mixture is then increased to about 175 to about 180°C, with recovery of additional distillate. The material can then be filtered with Celite 545 and Fuller's earth in order to reduce acidity down to about 10 ppm. The resulting hydride product was a clear fluid having a hydride content of 0.14% by weight, a viscosity of about 64 centipoise at 25 centipoise at 25°C, and the following formula

(VII)

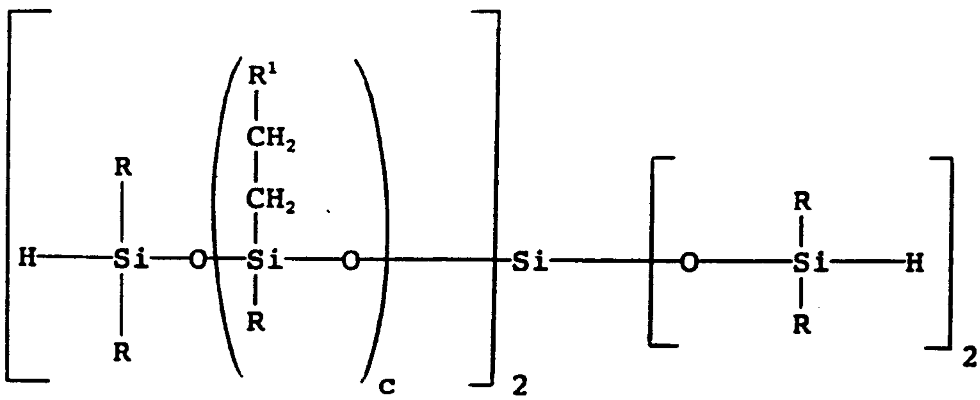

wherein R, $R^1$, and "c" are as previously defined.

The hydride-functional silicone resin of formula (VII) is mixed with a solution of VCHO and the rhodium catalyst, $RhCl(Ph_3P)_3$, wherein "Ph" represents phenyl. The mixture is brought to a temperature of from about 90 to about 120°C when sufficient VCHO is added dropwise to react with all silicon-bonded hydrogen groups (also referred to herein as "SiH") present in the resin and held there for about 1 to about 24 hours. A stabilizer, $CH_3N(C_{18}H_{37})_2$, is optionally added as a 10% solution in organic solvent, e.g., toluene. The organic solvent and excess VCHO are removed, e.g., by distillation at a temperature of 70 to about 140°C under a nitrogen stream. The resulting product had the formula

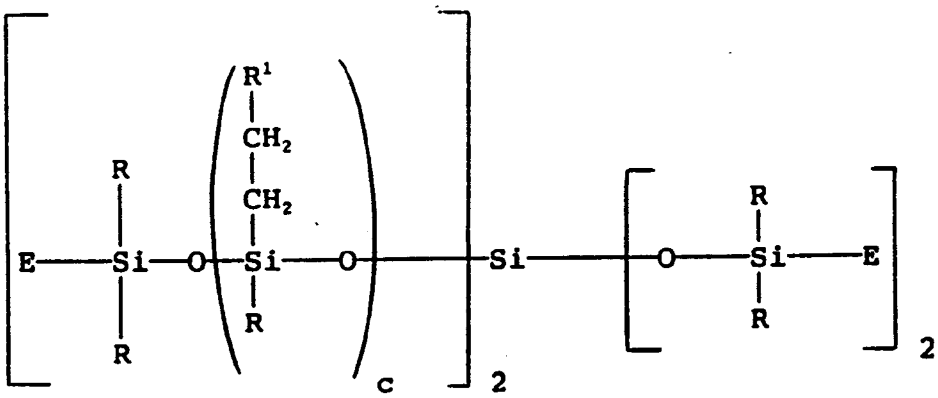

wherein E, R, $R^1$, and "c" are as previously defined.

An epoxy-functional fluorosilicone of formula (IV) can be prepared as follows.

Methylhydrogendichlorosilane and 3,3,3-trifluoropropyl-methyldichlorosilane are dissolved in dry toluene while under a nitrogen blanket. Trimethoxymethylsilane is added with agitation to the resulting mixture. After addition of the trimethoxymethylsilane is complete, the mixture is stirred for about 20 to about 30 minutes and then added to distilled water. External cooling is applied to keep the temperature at about 40°C. When the reaction subsides to about 28°C, the mixture is allowed to phase separate. The organic phase is then washed with water until the pH is about 6. The material is then heated while agitating under a slight nitrogen purge to a temperature of about 148°C in order to remove solvent, water, and alcohol. The vessel temperature is then increased to about 180°C over a period of about 3 to about 4 hours and additional distillate recovered. The

material can then be treated with Celite 545 and Fuller's earth in order to reduce acidity down to about 10 ppm. The resulting hydride product had a hydride content of 0.36% by weight, a viscosity of about 28.8 centipoise at 25°C, and the following formula

(VIII)

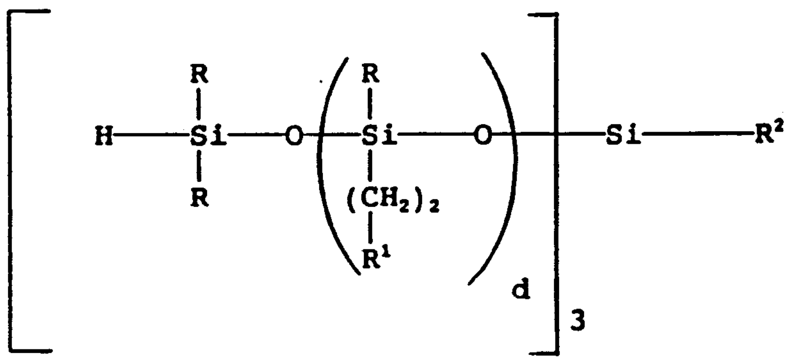

wherein R, $R^1$, $R^2$ and "d" are as previously defined.

The hydride-functional silicone of formula (VIII) is mixed with an organic solvent and a solution of $RhCl(Ph_3P)_3$ in 4-vinylcyclohexeneoxide. The mixture is brought to a temperature of from about 90 to about 120°C when sufficient VCHO is added dropwise to react with all SiH present in the silicone resin solution, and held there for about 1 to about 24 hours. A stabilizer, methyldicocoamine in toluene, can be added. The stabilized reaction mixture is then stripped of solvent in vacuo at 70 to 160°C. The resulting product has the formula

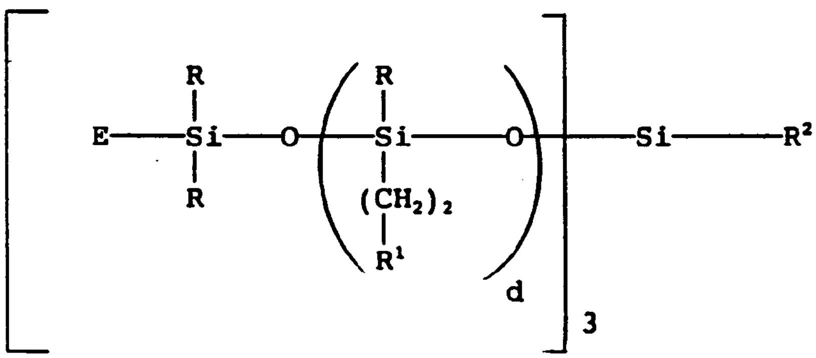

wherein R, $R^1$, $R^2$, E, and "d" are as previously defined.

The fluorinated organic molecules which can be used to co-cure with the epoxysilicones include alcohols, polyols, acrylates, epoxies, vinyl ethers, and other fluoro-organic molecules miscible with the epoxysilicone and co-curable under UV radiation in the presence of an onium salt catalyst. One preferred group of fluoro-organic molecules is fluorine-containing aliphatic alcohols having from 1 to about 10 carbon atoms. In the Examples below, the use of 1H,1H,5H-octafluoropentanol (OFP) and 1H,1H, 7H-dodecylfluoroheptanol prove to be beneficial in improving the adhesive release and minimizing the UV flux required for cure.

The hydrosilation catalyst used in the preparation of the epoxy-functional silicones of the present invention is a catalyst which promotes the hydrosilation reaction between the VCHO and the hydride-functional silicone. Useful catalysts for facilitating the hydrosilation curing reaction include precious metal catalysts such as those which use ruthenium, rhodium, palladium, osmium, iridium, and platinum, and complexes of these metals. Examples of suitable hydrosilation catalysts are disclosed, for example, in U.S. Patents Nos. 3,159,601 and 3,159,662 to Ashby; 3,220,970 to Lamoreaux; 3,814,730 to Karstedt; 3,516,946 to Modic; and 4,029,629 to Jeram; all of the foregoing patents being incorporated by reference herein. Preferred rhodium catalysts are Wilkinson's Catalyst which has the formula $RhCl(Ph_3P)_3$, wherein "Ph" is phenyl, and $RhCl_3(Bu_2S)_3$, wherein "Bu" is butyl (as taught by Chandra et al., U.S. Patent 3,928,629).

The present invention is particularly directed to UV co-curable compositions containing any one of the epoxy-functional silicones described herein and a fluorinated organic compound in combination with a catalytic

amount of onium salt photoinitiator or combination of onium salt photoinitiators.

Onium salt photoinitiators suitable for use in this invention include those having the formulae:

$$R^3{}_2I^+MX_n{}^-$$
$$R^3{}_2S^+MX_n{}^-$$
$$R^3{}_3Se^+MX_n{}^-$$
$$R^3{}_4P^+MX_n{}^-$$
$$R^3{}_4N^+MX_n{}^-$$

where radicals represented by $R^3$ can be the same or different organic radicals from 1 to 30 carbon atoms, including aromatic carbocyclic radicals of from 6 to 20 carbon atoms which can be substituted with from 1 to 4 monovalent radicals selected from $C_{(1-18)}$ alkoxy, $C_{(1-8)}$ alkyl, nitro, chloro, bromo, cyano, carboxy, mercapto, and the like, and also including aromatic heterocyclic radicals including, e.g., pyridyl, thiophenyl, pyranyl, and the like, and $MX_n$- is a non-basic, non-nucleophilic anion, such as $BF_4$-, $PF_6$-, $AsF_6$-, $SbF_6$-, $SbCl_6$-, $HSO_4$-, $ClO_4$-, and the like.

The preferred onium salts for use herein are the diaryliodonium salts. Examples of suitable diaryliodonium salts are disclosed, for example, in U.S. Patent No. 4,882,201 and U.S. Patent 4,279,717, which are incorporated herein by reference. Specific examples of such suitable diaryliodonium salts include 4-octyloxyphenylphenyl-iodonium hexafluoroantimonate, bis(dodecyl phenyl) iodonium hexafluoroarsenate and bis(dodecyl phenyl) iodonium hexafluoroantimonate. The most preferred of these iodonium salts is 4-octyloxyphenylphenyl-iodonium hexafluoroantimonate.

The amount of catalyst present in the compositions of the present invention is not critical, so long as proper polymerization is effected. As with any catalyst, it is preferable to use the smallest effective amount possible, for the purposes herein, catalyst levels of from about 0.5%-5.0% by weight have been found suitable.

The UV co-cured compositions of the present invention can be prepared by combining an epoxy-functional silicone and a fluorinated organic molecule with an onium salt photoinitiator or combination of onium salt photoinitiators, as discussed above, and exposing the mixture to an amount of ultraviolet radiation sufficient to co-cure the composition.

One advantage of the UV co-curable compositions of the present invention is their cure efficiency. The W-curable compositions of this invention will cure on exposure to UV radiation flux of from about 10 to about 200 millijoules/$cm^2$, requiring a cure time of only about 0.005 to about 0.1 seconds when two focused 300 watt/inch medium pressure mercury vapor UV lamps are used for cure.

The present invention is further directed to articles of manufacture comprising a substrate having disposed on the surface thereof a coating containing a co-cured composition of the present invention having an epoxy-functional silicone and a fluorinated organic molecule.

The articles of the present invention are prepared by applying the co-curable compositions to a substrate if the composition is to be used as a conformal coating, and thereafter exposing the coated substrate to ultraviolet radiation sufficient to co-cure the composition.

In order that those skilled in the art might be better able to practice the present invention, the following examples are given by way of illustration and not by way of limitation.

## EXAMPLE I

A control composition designated Example I was prepared via rhodium-catalyzed hydrosilation addition of 2 moles of 4-vinylcyclohexeneoxide to a pre-formed linear $Me_2HSiO_{1/2}$-stopped fluorosilicone of structure $M^HD^{Rf}{}_{14.4}M^H$ calculated based on SiH content, where $D^{Rf}$=

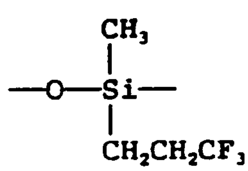

The rhodium catalyst used was an ethanolic solution of $RhCl_3(Bu_2S)_3$. The final product proved to be a 390 cstk viscosity fluid after removal of solvent and other low boilers, a calculated epoxy equivalent weight of 1228, 33.4 percent fluorine by weight, and having $n_D{}^{25}$ = 1.3978.

Example I was fairly miscible with 0.5 weight percent (4-octyloxyphenyl)phenyl iodonium hexafluoro-antimonate photocatalyst. The photocatalyst was in the form of a 50% solution in 1,3-bis(glycydoxy)-tetramethyldisiloxane. Isopropyl-thioxanthone sensitizer was also present at a concentration of 15 mole% of the iodonium

salt. This solution of sensitized iodonium salt will be referred to as photocatalyst package 1. Two mils of the catalyzed Example I mix were manually applied to polyethylene kraft sheets using an adhesive coater, then exposed to focused ultraviolet radiation in an RPC model QC1202 Lab Processor to effect cure. 18 $mJ/cm^2$ total UV flux were needed to cure this coating to a smear- and migration-free surface with good anchorage to the substrate.

Coatings of the same catalyzed coating bath having a thickness of 1.5 mils were prepared on polyester sheets, then cured to smear-free glossy surfaces by exposure to 150 $mJ/cm^2$ UV power. Tapes prepared using standard methyl silicone pressure sensitive adhesive (PSA) 595 and phenylsilicone PSA 524B, available from GE Silicones, Waterford, New York, were then firmly affixed to the cured coating on the polyester backing. The force required to peel the silicone PSA tapes from the UV-cured epoxyfluorosilicone was determined at 12 ipm, 180°< pull. Initial and aged laminates were measured and the results are shown below in Table I.

TABLE I

| Tape | Initial Release | 1 Day 25°C | 1 Wk 70°C |
|---|---|---|---|
| PSA 595 | 10 oz/in | 14 oz/in | 16 oz/in |
| PSA 524B | 11 oz/in | 12 oz/in | 11 oz/in |

Although the Example I coating did release these two silicone PSA tapes, release observed was very tight.

Experiments in accordance with the present invention were then conducted to determine the UV-cure response of a blend of Example I and a fluorinated monoalcohol, 1H,1H,5H-octafluoropentanol (OFP) having a hydroxy equivalent weight of 232. These two materials proved to be completely miscible. Surprisingly, OFP enhances the solubility of the iodonium photocatalyst solution in the mixture. Two coating baths were then prepared.

The first coating bath (A) contained 8.4 g of the Example I composition, 0.8 g OFP, and 0.1 g photocatalyst solution. The mole ratio of oxirane to hydroxyl was 1.0 : 0.5.

The second coating bath (B) contained 7.64 g of the Example I composition, 1.11 g OFP, and 0.09 g photocatalyst solution. The mole ratio of oxirane to hydroxyl was 1.0 : 0.75.

A two mil coating of A and a two mil coating of B were cured to smear- and migration-free surfaces on PEK substrates after exposure to 22 $mJ/cm^2$ UV flux. The UV flux required for cure was essentially the same as that for Example I without OFP. This observation is unexpectedly in contrast to the slowing of UV cure recorded when non-fluoro epoxysilicones are blended with non-fluorinated monomeric alcohols (Eckberg and Riding, Proceedings of the ACS Division of Polymeric Materials: Science & Engineering, 60, pg 222, Spring Meeting 1989, Dallas, Texas).

Several 1.5 mil UV-cured coatings of the Example I composition and OFP blends were prepared using the same photocatalyst concentration as above. The coatings were on polyester sheets as described previously. The coatings were then laminated with the same methyl and phenyl silicone PSA tapes as tested above. Release was determined as g/in for 100 ipm pull at 180°<, for the blends and is shown below in Table II.

TABLE II

| Mole Ratio Epoxy/OH | %F | Phenyl PSA | Methyl PSA |
|---|---|---|---|
| 1.0/0.5 | 36.1 | 12.7 oz/in | 460 g/in |
| 1.0/0.75 | 37.4 | 12.0 oz/in | 450 g/in |
| 1.0/0.9 | 38.1 | 10.6 oz/in | 370 g/in |
| 1.0/1.0 | 38.5 | 9.0 oz/in | 400 g/in |
| 1.0/1.0 | 38.5 | 8.1 oz/in | 370 g/in |

Increasing fluoro content of these photocurable compositions by use of octafluoropentanol monomer lowers the release force needed to delaminate silicone PSA's from the UV-cured fluoroepoxysilicone coatings. UV-curable epoxyfluorosilicone coatings with fluoroalkyl substituents richer in fluorine than trifluoropropyl are therefore expected to be effective silicone release agents when blended with appropriate fluoro-organic monomers capable of co-cure under cationic conditions.

EXAMPLES II AND III

Modification of UV-cured epoxysilicone coatings with co-curable fluoro-organic monomers is not limited to epoxyfluorosilicones such as in Example I. When octafluoropentanol is cured with the diepoxydisiloxane $M^EM^E$ having the formula:

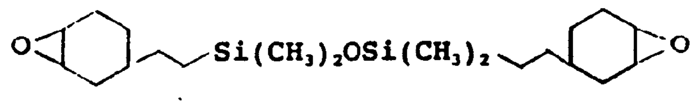

both the UV cure rate and the solvent resistance of the resultant UV-cured coating are enhanced. Example II was prepared by the hydrosilation addition of two moles of 4-vinylcyclohexeneoxide to 1,1,3,3-tetramethyldisiloxane. The addition product was blended with OFP in a 48/52 weight ratio, which is a 10/9 mole ratio of epoxy to hydroxyl. These two materials were quite miscible with each other, and also with 0.5% (4-octyloxyphenyl) phenyliodonium-hexafluoroantimonate, which was added to complete the W-curable coating bath. The mixture possessed 34.1 weight percent fluorine. Two mil thick coatings of this mixture were applied to PEK substrates and cured to a glossy, tough, smear- and migration-free surface on exposure to only 8 mJ/cm$^2$ total UV flux. The curing involved one pass at 200 watts per inch total UV lamp power at a very fast 500 feet per minute conveyor speed in an RPC lab UV processor unit (model QC1202).

Control Example III comprised the same hydrosilation addition product as Example II but containing no OFP. Example III was catalyzed and cured in the same fashion but required 15 mJ/cm$^2$ UV flux, which is also considered very fast. Surprisingly, the mixture of the diepoxide monomer with mono-alcohol proved to be a faster W-curable material than the diepoxide monomer itself. This is unusual, since monohydroxy components normally slow cationic UV cure through chain-termination mechanisms, as noted previously.

Five mil thick coatings of photocatalyzed Example II and Example III were manually applied to glass microscope slides, then completely cured in one pass at 400 watts UV power, 100 fpm conveyer speed on the RPC Lab device. These cured coatings were immersed in hexane for 135 minutes to ascertain relative solvent resistance. While the unmodified (Example III) coating displayed better solvent resistance in general than the higher molecular weight epoxysilicone of Example II, the coating with the OFP cured into it was more resistant to hexane than the coating without it. The greater resistance of Example III to other solvents is apparently due to the polycyclohexyl ether crosslinks which are less susceptible to solvent swelling than polydimethyl siloxane chains. Qualitative observations are noted below in Table III.

TABLE III

Example II (modified with OFP)

| | |
|---|---|
| 1 minute: | slight swelling on coating edge |
| 5 minutes: | slight swelling, slight delamination around coating edges |
| 10 minutes: | no change |
| 30 minutes: | no change |
| 60 minutes: | no change |
| 135 minutes: | slight delamination around coating edge, no swelling noted in center of coating |

Example III(unmodified)

| | | |
|---|---|---|
| 1 | minute: | slight swelling, softening |
| 2 | minutes: | no change |
| 10 | minutes: | cracking and lift-off from glass noted around coating edges |
| 20 | minutes: | cracking and lift-off spreading into coating from edges |
| 60 | minutes: | coating beginning to delaminate intact |
| 100 | minutes: | coating swelled, completely delaminated from glass slide |

EXAMPLE IV

Dodecylfluoroheptanol, a higher homolog of octafluoropentanol (OFP), functions as a cationic UV cure accelerator in the same fashion as octafluoropentanol in cycloaliphatic epoxy organic and analogous epoxy functional silicone systems.

1H,1H,7H-dodecylfluoroheptanol (DDFH), $HCF_2(CF_2)_5CH_2OH$, was obtained from PCR, Inc. (Gainesville, Florida) and was used as supplied. The molecular weight of DDFH, 332, is higher than that of OFP, so more DDFH is required than OFP in a formulation to furnish the same mole percent of epoxy-oligomer. UV cure performance of two non-silicone dicycloaliphatic epoxy monomers as a function of DDFH additive was assessed in the same fashion described in the Examples above. The compositions contained one weight percent photocatalyst package #1 described previously. Two epoxy resins were used to test the UV flux required for cure. Epoxy #1 was 3,4-epoxycyclo-hexylmethyl-3,4-epoxycyclohexyl carboxylate. Epoxy #2 was bis(3,4-epoxycyclohexylmethyl) adipate. The UV flux necessary for cure is shown below in Table IV. The flux was determined by first making a qualitative assessment of the cure to determine at which intensity a sample cures to become tack-free, migration-free, smear-free and through-cured by manipulation of the UV processor lamp intensity and conveyor speed. After a sample is determined to be completely cured a photometer is used to measure the UV energy per $cm^2$ required for the complete cure. In the Examples herein the flux was determined with an International Light photometer model IL700A equipped with an A309 light bug accessory.

TABLE IV

| RESIN | MOLE % DDFH | UV FLUX FOR CURE |
|---|---|---|
| Epoxy 1 | 0 | 83 $mJ/cm^2$ |
| Epoxy 1 | 30 | 46 $mJ/cm^2$ |
| Epoxy 1 | 60 | 40 $mJ/cm^2$ |
| Epoxy 1 | 90 | 32 $mJ/cm^2$ |
| Epoxy 2 | 0 | 185 $mJ/cm^2$ |
| Epoxy 2 | 30 | 152 $mJ/cm^2$ |
| Epoxy 2 | 60 | 73 $mJ/cm^2$ |
| Epoxy 2 | 90 | 55 $mJ/cm^2$ |

Similar results are obtained for Epoxy resins 1 and 2 blended with OFP.

EXAMPLE IV

The commercial UV cure epoxy-functional silicone paper release grade UV9300 and UV9315 available from GE Silicones, Waterford, New York (Epoxy Equiv. Wt. @ 1000), are completely miscible with DDFH, so that the effect of DDFH additive on the UV cure of these materials can be easily studied. Two different iodonium

photocatalyst packages were used for a UV9300 cure study:

Package #2 50% (octyloxyphenyl)-phenyliodonium-hexafluoroantimonate
3% isopropyl-thioxanthone sensitizer
47% Ciba-Geigy Araldite DY-025 alkylglycidylether diluent

Package #3 50% bis(dodecylphenyl)-iodonium-hexafluoroantimonate
2.6% isopropyl-thioxanthone sensitizer
47.4% Ciba-Geigy Araldite DY-025 alkylglycidylether diluent

UV flux required for through-cure of 0.5 mil coatings of UV9300/DDFH/catalyst baths coated on PEK substrates was determined as above using the lab UV processor. The results are shown below in Table V.

TABLE V

| WT. % DDFH | MOLE % DDFH | UV FLUX FOR CURE | Package CATALYST |
|---|---|---|---|
| 0 | 0 | 15 $mJ/cm^2$ | 2% #2 |
| 2 | 6 | 9 $mJ/cm^2$ | 2% #2 |
| 5 | 15 | 9 $mJ/cm^2$ | 2% #2 |
| 0 | 0 | 30 $mJ/cm^2$ | 2% #3 |
| 2 | 6 | 25 $mJ/cm^2$ | 2% #3 |
| 5 | 15 | 20 $mJ/cm^2$ | 2% #3 |
| 10 | 30 | 16 $mJ/cm^2$ | 2% #3 |

wherein mole % DDFH refers to moles OH per moles epoxy in UV9300

Nine $mJ/cm^2$ UV flux is the photometer-measured UV power delivered to the coating when the PPG UV Processor runs at 400 fpm with two lamps set at 100 watts per inch nominal power. Thirty $mJ/cm^2$ flux was measured at 400 fpm with each UV lamp set at 300 watts per inch nominal power.

These experiments confirm the general nature of the UV cure enhancing nature of fluoroalcohol additives for iodonium-catalyzed cationic UV cure of epoxy resins. Higher $CF_2$-homologs of OFP and DDFH are available from DuPont as 'Zonyl 'BA intermediates.

The improvements in UV cure performance of epoxysilicone polymers and iodonium photocatalyst compositions such as UV9300 plus $(C_{12}H_{25}Ph)_2I^+SbF_6$-packages include other UV curable epoxysilicone release systems and their applications. In particular, it has been discovered that GE Silicones epoxysilicone release grades UV9300 and UV9315, when photocatalyzed with the iodonium catalyst solutions package #3 and package #2, respectively, provide much improved release stability versus an aggressive acrylic PSA if certain fluoroalcohols are added to the coating baths prior to coating the materials on supercalendered kraft (SCK) paper substrates.

EXAMPLE V

The following coating baths were prepared:

A: 100 parts UV9300 + 3 parts package #3 catalyst solution
B: 98 parts UV9300 + 2 parts OFP + 3 parts package #3
C: 95 parts UV9300 + 5 parts OFP + 3 parts package #3
D: 100 parts UV9315 + 2 parts package #2 catalyst solution
E: 98 parts UV9315 + 2 parts DDFH + 2 parts package #2
F: 95 parts UV9315 + 5 parts DDFH + 5 parts package #2

These compositions were coated on James River 42#/ream standard supercalendered kraft (SCK) release liner using an 18 inch three roll offset gravure coater equipped with two banks of 300 watt/inch Fusion Systems 'H' lamps mounted across the coated web about 2 meters from the coating head. Even depositions of about 1.45 $g/m^2$ coat weight were applied to the SCK at a line speed of 400 fpm. Cured samples of the coated paper were laminated with a 3 mil thickness of Monsanto Gelva™263 acrylic PSA with a second sheet of PSA applied atop the adhesive layer as a face stock. Laminates were cut into 2" x 9" tapes, and the force required to remove the silicone/SCK lamina from the PSA/face stock lamina at 400 inch/minute pull speed and 180° angle was measured at regular intervals over a four week period as the tapes were aged at 25°C and 50% relative humidity. Ideal release performance is an easy, stable release as the complete constructions are aged.

Unstable, usually climbing release, is evidence of incomplete cure of the silicone coating, and is unacceptable in the converting industry. The results are tabulated below in Table VI.

| BATH | INITIAL RELEASE | 4 WK AGED RELEASE |
|---|---|---|
| A | 30-35 g/2in | 80-90 g/2in |
| B | 30-35 g/2in | 55-65 g/2in |
| C | 30-35 g/2in | 55-60 g/2in |
| D | 35-40 g/2in | 340-390 g/2in |
| E | 25-30 g/2in | 85-95 g/2in |
| F | 30-35 g/2in | 60-70 g/2in |

The improvement in release stability caused by the fluoroalcohol additives is striking, particularly in the case of the UV9315 and catalyst package #2 system. Improved solubility of $C_8H_{17}O\text{-}PhI^+PhSbF_6^-$ which is otherwise insoluble in UV9315 appears to account for the enhanced release performance in this case. The iodonium catalyst solution package #3 is very miscible in the polymer UV9300, so the observation in the baths containing package #3 are derived from other factors such as the mildly acidic nature of these fluoroalcohols helping overcome basic materials or moisture in SCK which can inhibit cure.on this paper substrate.

According to the present invention, other approaches to modification of epoxysilicones and epoxyfluorosilicone UV cure systems with organofluoromonomers include hybrid UV systems using perfluorinated acrylates with the cationic epoxysilicones. (A combination of different types of photocatalysts is expected to be required for such a mixture to be UV curable.) The co-curable combination of epoxysilicone resins + fluoro-organic modifiers for improved UV cure, silicone PSA release, and solvent resistance is also considered to be within the scope of the present invention.

Although the present invention has been described in connection with preferred embodiments, it will be appreciated by those skilled in the art that additions, modifications, substitutions and deletions not specifically described may be made without departing from the spirit and scope of the invention defined in the appended claims.

## Claims

1. A curable epoxy resin composition comprising an epoxy monomer or oligomer and a fluoro-containing organic molecule which are co-cured by UV radiation in the presence of a catalytic amount of an onium salt catalyst, said epoxy resin selected from the group consisting of:

(A) linear epoxy-functional silicones having the general formula

(I)

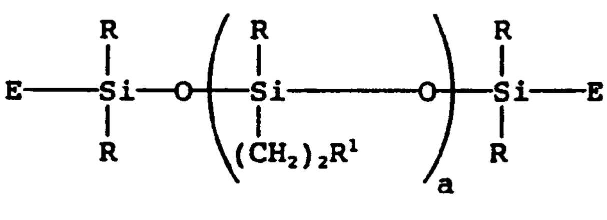

(B) linear epoxy-functional silicones having the general formula

(II)

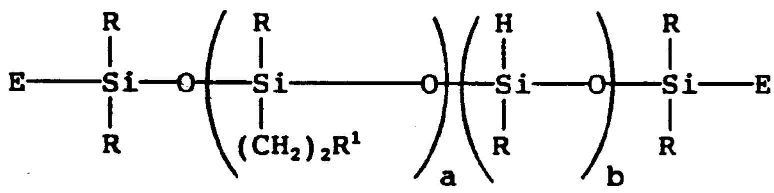

(C) resinous epoxy-functional silicones having the general formula

(III)

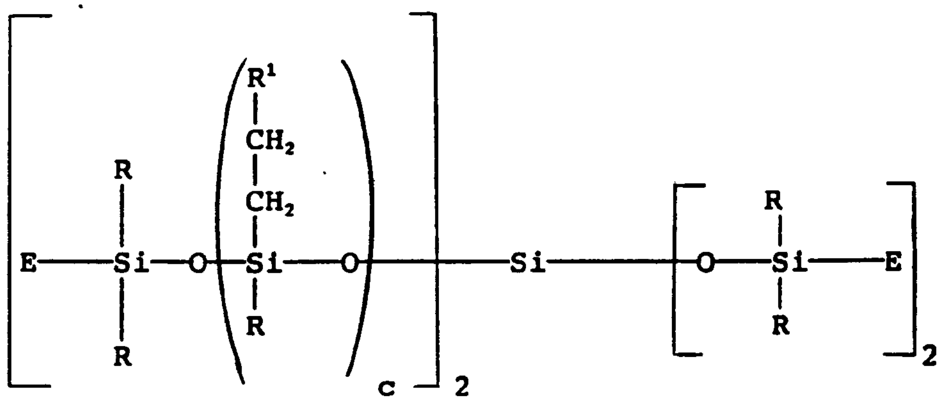

(D) resinous epoxy-functional silicones having the general formula

(IV)

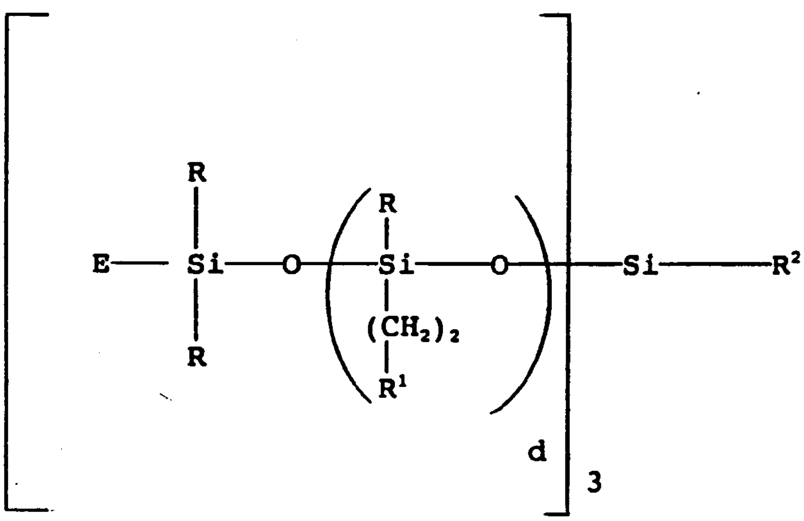

wherein E represents an epoxy-functional organic group of from about 2 to about 20 carbon atoms, R represents an alkyl radical having from 1 to about 10 carbon atoms, $R^1$ represents an alkyl or perfluoroalkyl radical having from about 1 to about 8 carbon atoms, $R^2$ represents an alkyl radical having from 1 to about 10 carbon atoms, "a" represents a number from 1 to about 100, "b" represents a number from 1 to about 100, "c" represents a number from 1 to about 100, and "d" represents a number from 1 to about 100; and

(E) Polycycloaliphatic epoxy compositions of the general formula

(V)

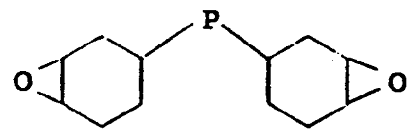

where P is

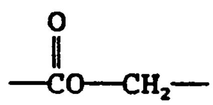

or

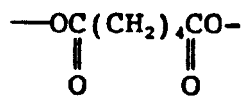

2. A curable epoxy resin composition according to claim 1 wherein said epoxy resin is selected from the group consisting of (A), (B), (C) and (D) and wherein E represents the radical

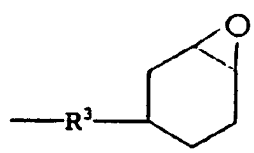

wherein $R^3$ represents an alkylene radical having from 1 to about 10 carbon atoms.

3. A curable epoxy resin composition according to claim 1 wherein said fluoro-containing organic molecule is an aliphatic fluoro-containing alcohol having from 1 to about 10 carbon atoms.

4. A curable epoxy resin composition according to claim 1 wherein said epoxy resin is selected from the group consisting of (A), (B), (C) and (D) and wherein "a" represents a number from about 3 to about 30.

5. A curable epoxy resin composition according to claim 1 wherein said epoxy resin is selected from the group consisting of (A), (B), (C) and (D) and wherein "b" represents a number from about 3 to about 30.

6. A curable epoxy resin composition according to claim 1 wherein said epoxy resin is selected from the group consisting of (A), (B), (C) and (D) and wherein "c" represents a number from about 1 to about 20.

7. A curable epoxy resin composition according to claim 1 wherein said epoxy resin is selected from the group consisting of (A), (B), (C) and (D) and wherein "d" represents a number from about 1 to about 20.

8. An ultraviolet radiation-curable co-curable epoxy resin composition comprising:

(1) an epoxy resin selected from the group consisting of:

(A) linear epoxy-functional silicones having the general formula

(I)

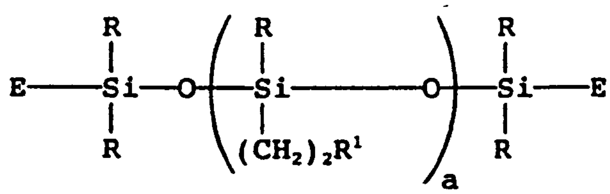

(B) resinous epoxy-functional silicones having the general formula

(II)

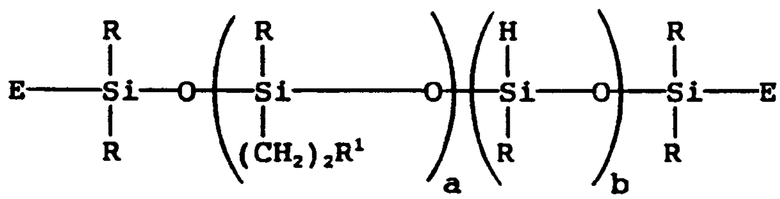

(C) resinous epoxy-functional silicones having the general formula

(III)

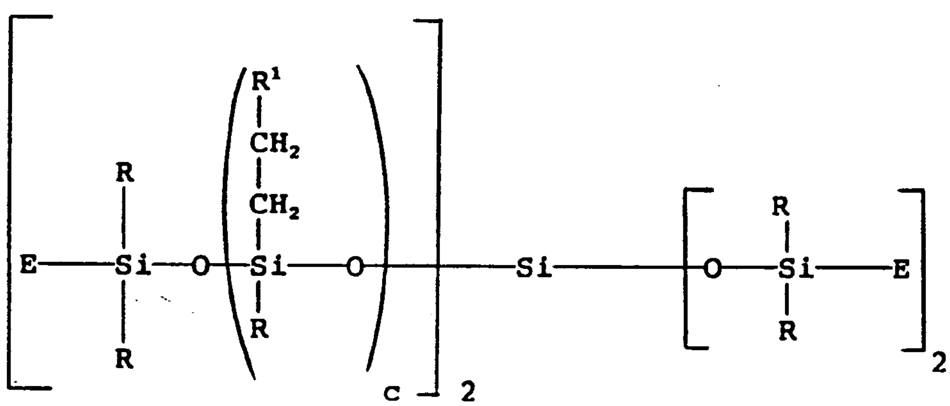

(D) resinous epoxy-functional silicones having the general formula

(IV)

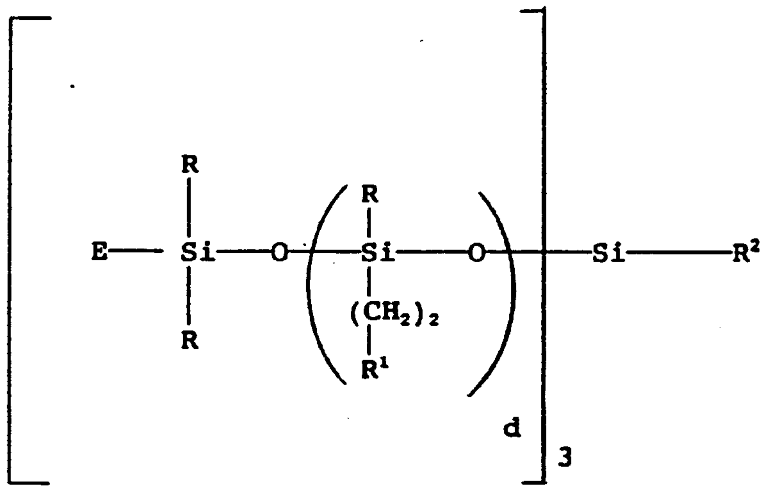

wherein E represents an epoxy-functional organic group of from about 2 to about 20 carbon atoms, R represents an alkyl radical having from 1 to about 10 carbon atoms, $R^1$ represents an alkyl or perfluoroalkyl radical having from about 1 to about 8 carbon atoms, $R^2$ represents an alkyl radical having from 1 to about 10 carbon atoms, "a" represents a number from 1 to about 100, "b" represents a number from 1 to about 100, "c" represents a number from 1 to about 100, and "d" represents a number from 1 to about 100; and (E) polycycloaliphatic epoxy compositions of the general formula

(V)

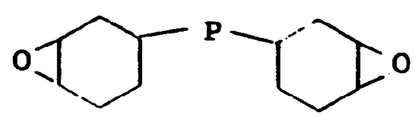

where P is

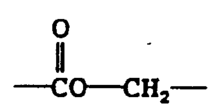

or

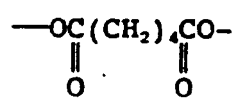

(2) a fluoro-containing organic molecule which is miscible with (1) and which can co-cure with (1) in the presence of an onium salt catalyst upon exposure to ultraviolet radiation; and
(3) a catalytic amount of an onium salt - photocatalyst or a combination of onium salt photocatalysts.

9. An epoxy resin composition according to claim 8 wherein said fluoro-containing organic molecule is an aliphatic fluoro-containing alcohol having from 1 to about 10 carbon atoms.

10. An epoxy resin composition according to claim 16 wherein the photocatalyst (2) is a diaryliodonium salt.